# EUROPÄISCHE PATENTANMELDUNG

(11) **EP 1 038 721 A2**
(43) Veröffentlichungstag der Anmeldung: **27.09.2000**
(21) Anmeldenummer: 00104414.8
(22) Anmeldetag: 02.03.2000
(51) Int. Cl.: B60K 31/04

(54) **Bedienungsvorrichtung für eine Geschwindigkeitsregelanlage**

(30) Priorität: 20.03.1999 DE 19912726
(71) Anmelder: Volkswagen Aktiengesellschaft, 38436 Wolfsburg (DE)
(72) Erfinder: Bizenberger, Thomas, 38116 Braunschweig (DE)

(57) **Zusammenfassung**

Es wird eine Bedienungsvorrichtung für eine Geschwindigkeitsregelanlage eines Kraftfahrzeuges beschrieben, mit einem Schalter (1), der relativ zu einem Schalterkörper in mehrere Stellungen, insbesondere eine Neutralstellung bewegbar ist, um verschiedenen Bedienungsfunktionen zugeordnete Kontakte innerhalb des Schalters (1) zu öffnen und zu schließen. Um eine Fehlfunktion bei Auftreten eines Wackelkontaktes sicher zu verhindern, ist der Neutralstellung (N) ebenfalls mindestens ein Kontakt (7) zugeordnet und eine Signalerfassungs- und Auswerteeinrichtung (14) vorhanden, an der den Kontakten (2, 3, 4, 5, 6) zugeordnete Signalleitungen (8, 9, 10, 11, 12, 13) angeschlossen sind, wobei die Signalerfassungs- und Auswerteeinrichtung (14) eine Logikschaltung aufweist, die bei gleichzeitigem Anliegen eines der Neutralstellung (N) zugeordneten Signals und eines einer Bedienungsfunktion zugeordneten Signals die Ausführung der Bedienungsfunktion verhindert.

## Beschreibung

Die Erfindung betrifft eine Bedienungsvorrichtung für eine Geschwindigkeitsregelanlage eines Kraftfahrzeuges, mit einem Schalter, der relativ zu einem Schalterkörper in mehrere Stellungen, insbesondere eine Neutralstellung bewegbar ist, um verschiedenen Bedienungsfunktionen zugeordnete Kontakte innerhalb des Schalters zu öffnen und zu schließen.

Fahrzeuge werden vielfach mit einer Geschwindigkeitsregelanlage ausgestattet, d.h. mit einer Vorrichtung zur Aufrechterhaltung einer gewünschten Fahrgeschwindigkeit. Mit den zur Bedienung einer solchen Anlage verwendeten Schaltern können eine Reihe festgelegter Bedienungsfunktionen gesteuert werden. Bei diesen Funktionen handelt es sich üblicherweise um eine 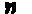 Ein/Aus"-Funktion, eine Beschleunigungsfunktion, eine Verzögerungsfunktion, eine Wiederaufnahme-Funktion und eine Funktion, die ein zeitweises Abschalten der Geschwindigkeitsregelung ohne ein Löschen der eingestellten Geschwindigkeit erlaubt. Die letztere Funktion wird üblicherweise als 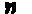 Tip-Off"-Funktion bezeichnet.

Die gegenwärtig bei Geschwindigkeitsregelanlagen verwendeten Bedienungsvorrichtungen sind unterschiedlich ausgeführt. Bekannt ist unter anderem eine Bedienungsvorrichtung, die zwei unabhängig voneinander zu bedienende, an einem Blinkhebel des Kraftfahrzeuges angeordnete Schalter umfaßt, mit denen die unterschiedlichen Funktionen der Geschwindigkeitsregelanlage einstellbar sind. Die Schalter sind in Form eines Schiebeschalters und eines Tastschalters ausgebildet. Mit dem Schiebeschalter kann die Anlage ein- und ausgeschaltet sowie die Wiederaufnahme-Funktion abgerufen werden. Über den Tastschalter kann dagegen die gewünschte Fahrgeschwindigkeit eingestellt werden. Eine solche Bedienungsvorrichtung ist beispielsweise in der WO 94/22687 beschrieben.

Desweiteren existieren Bedienungsvorrichtungen mit nur einem Schalter, wobei der Schalter längs einer Achse verschiebbar und um diese Achse drehbar ist, um die unterschiedlichen Funktionen der Geschwindigkeitsregelanlage einzustellen bzw. abzurufen. Eine derartige Bedienungsvorrichtung, deren Schalter in insgesamt sechs Stellungen bewegt werden kann, ist in der DE 196 45 561 A1 beschrieben.

Die zur Bedienung einer Geschwindigkeitsregelanlage verwendeten Schalter sind üblicherweise in der 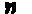 Aus"-Stellung gegen eine ungewollte Einschaltbewegung verrastet, während sie in der 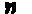 Ein"-Stellung federbelastet sind, so daß sie nach erfolgter Betätigung aus der jeweiligen Schaltstellung automatisch in eine Neutralstellung zurückkehren. Befindet sich der Schalter in der Neutralstellung, kann es jedoch bei Auftreten eines Wackelkontaktes zu einer Fehlfunktion kommen. Aus Sicherheitsgründen ist es wichtig, einen Wackelkontakt in der Bedienungsvorrichtung einer Geschwindigkeitsregelanlage auszuschließen bzw. einen Wackelkontakt von einer tatsächlichen Bedienung durch den Fahrer zu unterscheiden. Insbesondere ist es wichtig, eine ungewollte Beschleunigung des Fahrzeuges zu verhindern.

Der vorliegenden Erfindung liegt daher die Aufgabe zugrunde, eine Bedienungsvorrichtung der eingangs genannten Art dahingehend zu verbessern, daß bei Auftreten eines elektrischen Fehlers an einem der Kontakte der Bedienungsvorrichtung eine Fehlfunktion in der Geschwindigkeitsregelanlage sicher verhindert wird.

Diese Aufgabe wird erfindungsgemäß dadurch gelöst, daß der Neutralstellung des Schalters ebenfalls mindestens ein Kontakt zugeordnet ist und eine Signalerfassungs- und Auswerteeinrichtung vorhanden ist, an der den Kontakten zugeordnete Signalleitungen angeschlossen sind, wobei die Signalerfassungs- und Auswerteeinrichtung eine Logikschaltung aufweist, die bei gleichzeitigem Anliegen eines der Neutralstellung zugeordneten Signals und eines einer Bedienungsfunktion zugeordneten Signals die Ausführung der Bedienungsfunktion verhindert.

Die erfindungsgemäße Lösung beruht auf der Erkenntnis, daß eine durch einen Wackelkontakt bedingte Fehlfunktion verhindert werden kann, wenn in der Neutralstellung des betreffenden Schalters ein Kontakt vorgesehen wird, der eine logische Auswertung der abgegebenen Bedienungssignale ermöglicht. Denn liegen das Signal der Neutralstellung und ein Bedienungssignal, beispielsweise das Beschleunigungssignal, gleichzeitig an, so muß ein elektrischer Fehler in der Bedienungsvorrichtung vorliegen. Mit der in Anspruch 1 angegebenen Bedienungsvorrichtung kann daher in zuverlässiger Weise das Auftreten einer durch einen Wackelkontakt bedingten Fehlfunktion in einer Geschwindigkeitsregelanlage verhindert werden.

Nach einer vorteilhaften Ausgestaltung der erfindungsgemäßen Bedienungsvorrichtung kann ferner vorgesehen sein, daß die Signalerfassungs- und Auswerteeinrichtung die Geschwindigkeitsregelanlage automatisch ausschaltet, wenn sie über eine bestimmte Zeitdauer keines der den verschiedenen Stellungen des Schalters zugeordneten Signale erfaßt. Durch diese Ausgestaltung wird die Sicherheit vor Fehlfunktionen in einer Geschwindigkeitsregelanlage zusätzlich erhöht.

Vorteilhaft ist es ferner, wenn die Signalerfassungs- und Auswerteeinrichtung beim Auftreten eines elektrischen Fehlers an einem der Kontakte des Schalters eine optische und/oder akustische Fehlermeldung bewirkt.

Die erfindungsgemäße Bedienungsvorrichtung kann vorzugsweise bei einem in sechs Stellungen bewegbaren Schalter einer Geschwindigkeitsregelanlage angewendet werden. Die Erfindung ist allerdings nicht hierauf beschränkt, vielmehr läßt sie sich in vorteilhafter Weise auch bei einer mehrere Schalter aufweisenden Geschwindigkeitsregelanlage verwirklichen.

Die Erfindung wird nachfolgend anhand einer mehrere Ausführungsbeispiele darstellenden Zeichnung näher erläutert. Es zeigen:
- Figur 1: ein schematisches Blockschaltbild einer erfindungsgemäßen Bedienungsvorrichtung mit einem in sechs Stellungen bewegbaren Schalter;
- Figuren 2 bis 7: jeweils Draufsichten auf ein zweites Ausführungsbeispiel einer erfindungsgemäßen Bedienungsvorrichtung in schematischer Darstellung mit einem in sechs Stellungen bewegbaren Schalter, und
- Figuren 8 bis 12: jeweils schematische Schnittansichten des Schalters gemäß den Figuren 2 bis 7, und zwar in dessen Neutralstellung, der der Fahrzeugbeschleunigung entsprechenden Schaltstellung (Fig. 10), der der Verzögerung entsprechenden Schaltstellung (Fig. 12) sowie zwei Zwischenstellungen (Fig. 9 bzw. 11).

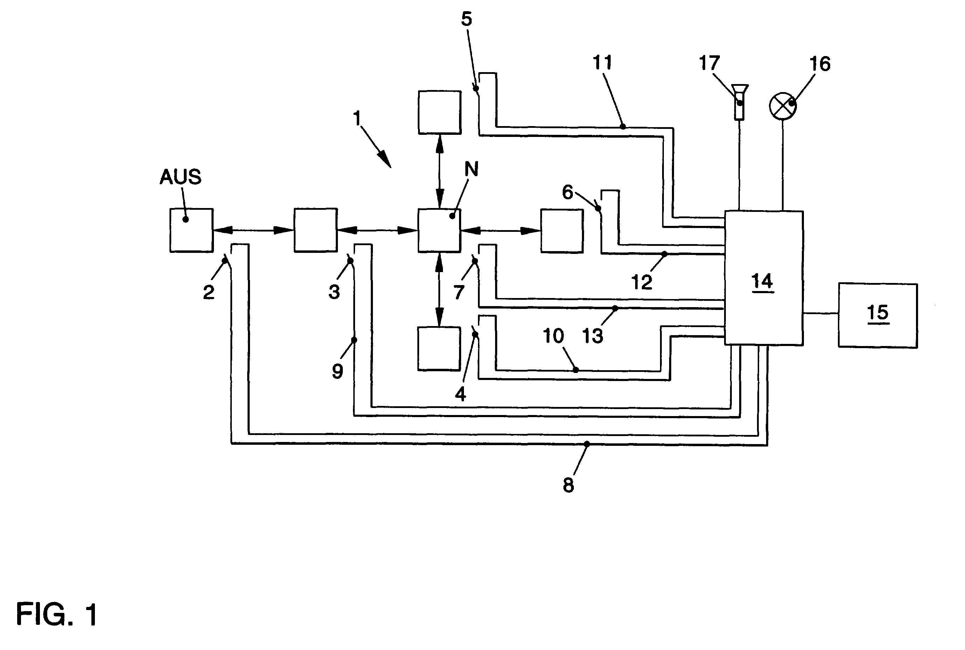

Fig. 1 zeigt eine Bedienungsvorrichtung für eine Geschwindigkeitsregelanlage eines Kraftfahrzeuges. Die Bedienungsvorrichtung weist einen federbelasteten Schalter 1 auf, der relativ zu einem Schalterkörper (nicht gezeigt) in sechs Stellungen bewegbar ist, um den Bedienungsfunktionen der Geschwindigkeitsregelanlage zugeordnete Kontakte 2, 3, 4, 5, 6 zu öffnen und zu schließen. Die sechs Stellungen des Schalters 1 sind durch Rechtecke dargestellt. In der äußerst linken Schalterstellung ist die Geschwindigkeitsregelanlage ausgeschaltet. In dieser Stellung ist der Schalter durch einen Rastmechanismus (nicht gezeigt) gegen eine ungewollte Bewegung gesichert. Durch Verschieben des Schalters nach rechts wird die Anlage eingeschaltet. Im betriebsbereiten Zustand befindet sich der federbelastete Schalter normalerweise in der mit N bezeichneten Stellung. Durch Verschieben des Schalters aus der Neutralstellung N nach oben kann die gewünschte Fahrgeschwindigkeit erhöht werden. Durch Verschieben des Schalters aus der Neutralstellung N nach unten kann die gewünschte Fahrgeschwindigkeit entsprechend verringert werden.

Betätigt der Fahrer die Bremse oder die Kupplung, so wird die Geschwindigkeitsregelanlage automatisch abgeschaltet. Die zuvor eingestellte Fahrgeschwindigkeit ist allerdings gespeichert und kann durch Verschieben des Schalters 1 aus der Neutralstellung N in die äußerst rechte Stellung reaktiviert werden (Wiederaufnahme-Funktion).

Durch Verschieben des Schalters 1 aus der Neutralstellung N nach links kann die Geschwindigkeitsregelung zeitweise abschaltet werden, ohne daß die eingestellte Fahrgeschwindigkeit gelöscht wird ( 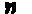 Tip-Off"-Funktion). Läßt der Fahrer den Schalter 1 wieder los, so kehrt er aufgrund der Federbelastung automatisch in die Neutralstellung N zurück.

Wie in Fig. 1 schematisch dargestellt ist, ist der Neutralstellung N ebenfalls ein Kontakt 7 zugeordnet. Die den Kontakten 2 bis 7 zugeordneten Signalleitungen 8, 9, 10, 11, 12, 13 sind jeweils an einer Signalerfassungs- und Auswerteeinrichtung 14 angeschlossen. Die Signalerfassunge- und Auswerteeinrichtung 14 ist mit einer Logikschaltung versehen, die bei gleichzeitigem Anliegen eines der Neutralstellung N zugeordneten Signals und eines einer Bedienungsfunktion zugeordneten Signals die betreffende Bedienungsfunktion sperrt.

Liegt das Signal der Neutralstellung N dagegen nicht an, sondern nur das Signal einer der anderen fünf Schalterstellungen, so wird letzteres Signal an eine Steuervorrichtung 15 weitergeleitet und die entsprechende Bedienungsfunktion ausgeführt.

Beim Verschieben des Schalters 1 von einer seiner Stellungen in eine andere Stellung liegt normalerweise kurzfristig keines der den Kontakten 2 bis 7 zugeordneten Signale an. Es wäre allerdings nicht normal, wenn über eine längere Zeitdauer keines der Signale anliegt. Nach einer bevorzugten Ausgestaltung der Erfindung ist daher vorgesehen, daß die Signalerfassungs- und Auswerteeinrichtung 14 die Geschwindigkeitsregelanlage automatisch abschaltet, wenn sie über eine bestimmte Zeitdauer keines der den verschiedenen Stellungen des Schalters 1 zugeordneten Signale erfaßt. Die Logikschaltung der Signalerfassungs- und Auswerteeinrichtung 14 ist hierzu mit einem Zeitglied ausgestattet.

Um den Fahrer auf einen eventuellen elektrischen Fehler an einem der Kontakte 2 bis 7 des Schalters 1 aufmerksam zu machen, ist die Signalerfassungs- und Auswerteeinrichtung 14 ferner mit einer Warnleuchte 16 sowie einem Summer 17 verbunden.

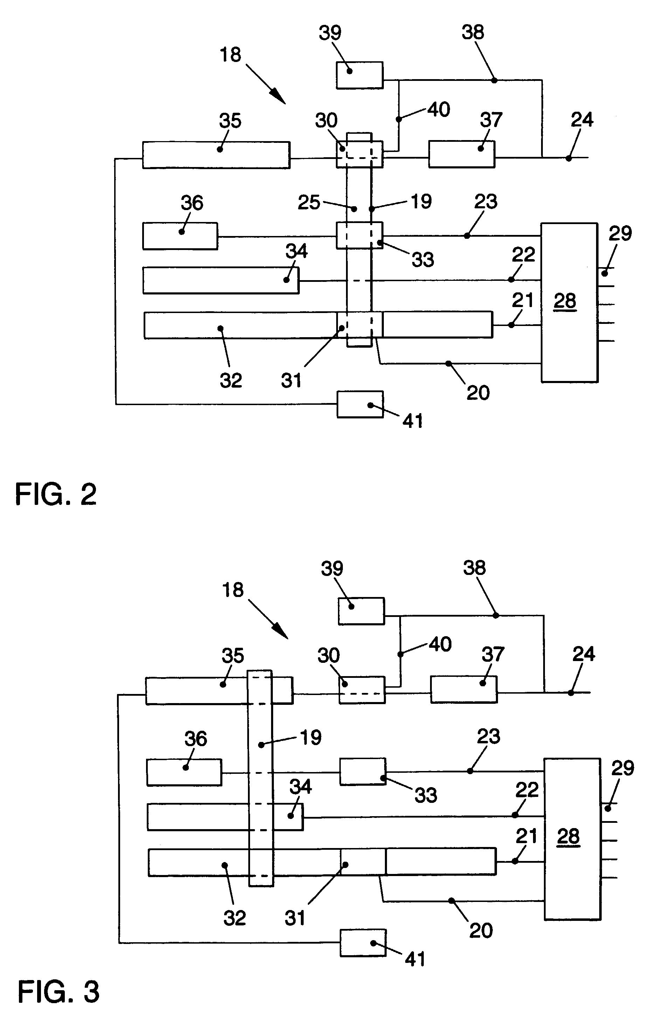

Die Fig. 2 bis 12 zeigen ein weiteres Ausführungsbeispiel einer erfindungsgemäßen Bedienungsvorrichtung. Die Vorrichtung weist einen Schalter 18 mit einer Kontakteinheit 19 auf, die in sechs Stellungen bewegt werden kann und in der jeweiligen Stellung eine erste, zweite, dritte bzw. vierte Signalleitung 20, 21, 22, 23 mit einer an der Spannungsversorgung des Kraftfahrzeugs angeschlossenen Speiseleitung 24 verbindet.

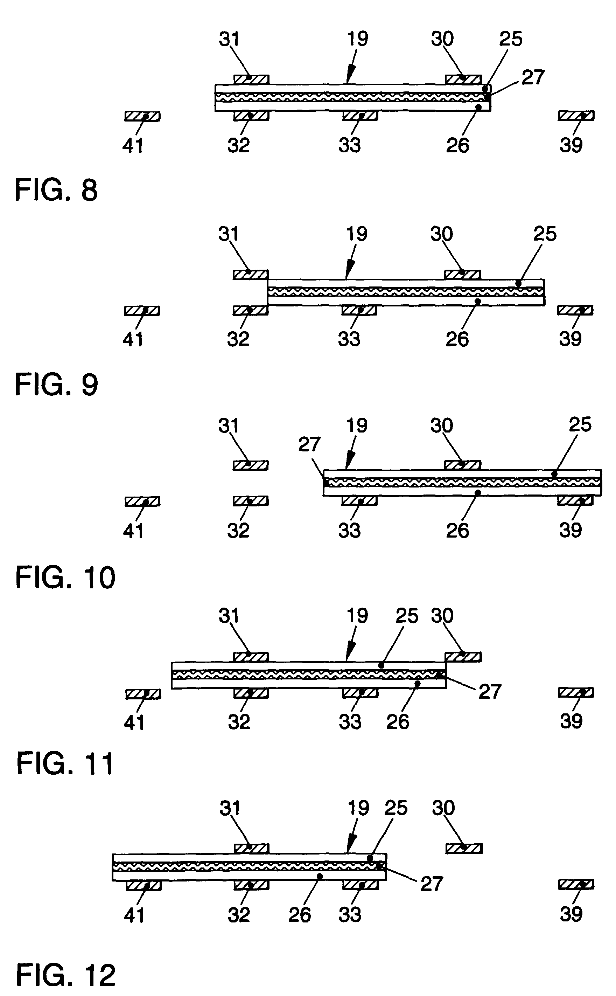

Über die erste Signalleitung 20 wird ein der Neutralstellung des Schalters 18 zugeordnetes Signal übertragen, wohingegen über die zweite, dritte bzw. vierte Signalleitung 21, 22, 23 die Bedienungssignale übertragen werden. Die Bedingungssignale bestehen bei diesem Ausführungsbeispiel aus einem dreistelligen Code, dessen Stellen die zwei möglichen Signalpegel der zweiten, dritten bzw. vierten Signalleitung 21, 22, 23 aufweisen können, nämlich ein vorhandenes Signal (= 1) oder kein Signal (= 0). Das der Neutralstellung zugeordnete Signal besteht dagegen einfach aus einem positiven Signal, d.h. einem vorhandenen Signal. Die Kontakteinheit 19 des Schalters 18 weist zwei Leiterelemente 25, 26 auf, die durch eine Kunststoffschicht 27 oder dergleichen voneinander elektrisch isoliert sind (vgl. Figuren 8 bis 12).

Die Signalleitungen 20, 21, 22, 23 führen zu einer Signalerfassungs- und Auswerteeinrichtung 28, die durch einen Leitungsstrang 29 mit einer Steuereinrichtung (nicht gezeigt) der Geschwindigkeitsregelanlage verbunden ist. Die Steuereinrichtung gibt auf bekannte Weise an das Steuersystem des Motors Signale zur Regelung der Antriebsleistung und damit der Geschwindigkeit des Fahrzeugs ab.

In den Figuren 2 und 8 befindet sich der Schalter 18 in seiner Neutralstellung. In dieser Stellung verbindet das obere Leiterelement 25 der Kontakteinheit 19 ein an der Speiseleitung 24 angeschlossenes Kontaktteil 30 mit einem an der ersten Signalleitung 20 angeschlossenen Kontaktteil 31. Das untere Leiterelement 26 der Kontakteinheit 19 berührt in der Neutralstellung zwar an der zweiten bzw. vierten Signalleitung 21, 23 angeschlossene Kontaktteile 32, 33, hat in dieser Stellung jedoch keine Verbindung mit der Speiseleitung 24.

Bei Verschieben des Schalters 18 in die in Fig. 3 gezeigte Stellung bleibt das untere Leiterelement 26 der Kontakteinheit 19 mit dem an der zweiten Signalleitung 21 angeschlossenen Kontaktteil 32 weiter verbunden und kommt zusätzlich mit einem an der dritten Signalleitung 22 angeschlossenen Kontaktteil 34 sowie einem weiteren an der Speiseleitung 24 angeschlossenen Kontaktteil 35 in Verbindung. In dieser Stellung wird demzufolge ein Signal von der Speiseleitung 24 über die zweite und dritte Signalleitung 21, 22 an die Signalerfassungs- und Auswerteeinrichtung 28 sowie die Steuereinrichtung der Geschwindigkeitsregelanlage übertragen. Dieses Signal, das vorzugsweise der 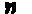 TIP-OFF"-Funktion zugeordnet ist, weist den dreistelligen Code 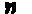 1 1 0" auf.

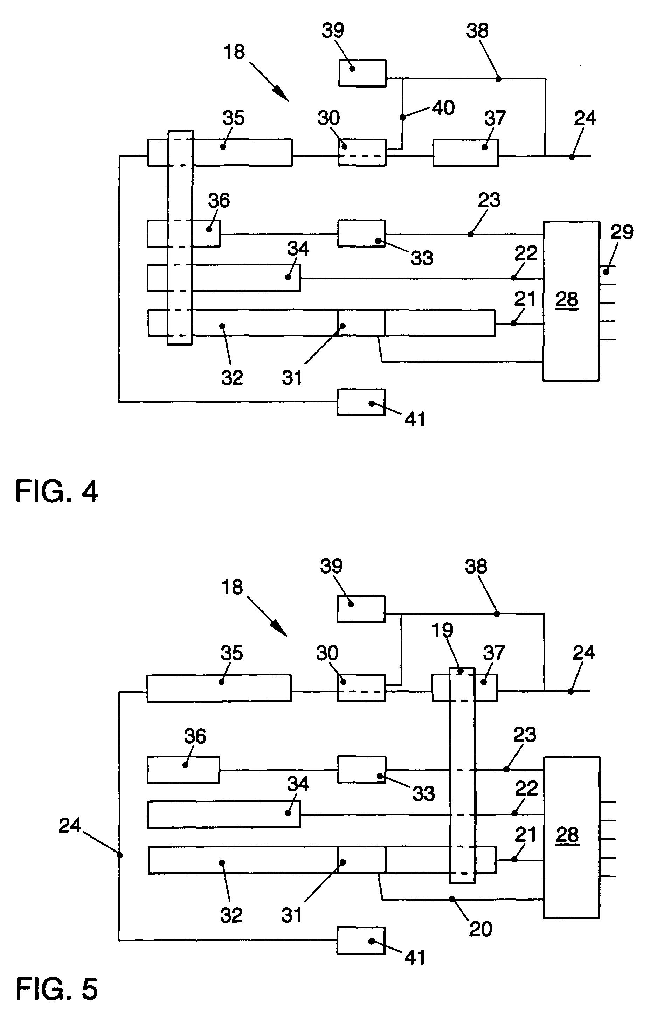

Wird der Schalter 18 weiter nach links in die in Fig. 4 gezeigte Stellung verschoben, so gelangt das untere Leiterelement 26 der Kontakteinheit 19 mit einem weiteren Kontaktteil 36 in Verbindung, das an der vierten Signalleitung 23 angeschlossen ist. In der in Fig. 4 gezeigten Stellung ergibt sich somit ein Signal, dessen dreistelliger Code 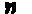 1 1 1" lautet. Durch dieses Signal wird die Geschwindigkeitsregelanlage vorzugsweise ausgeschaltet, wobei der Schalter 18 in dieser Stellung durch eine Einrastvorrichtung (nicht gezeigt) gegen eine ungewollte Bewegung gesichert ist.

Wenn der Schalter dagegen aus seiner Neutralstellung nach rechts in die in Fig. 5 gezeigte Stellung verschoben wird, so bleibt das untere Leiterelement 26 der Kontakteinheit 19 mit dem an der zweiten Signalleitung 21 angeschlossenen Kontaktelement 32 verbunden und gelangt mit einem weiteren an der Speiseleitung 24 angeschlossenen Kontaktteil 37 in Verbindung. In dieser Schalterstellung ergibt sich demzufolge ein Signal mit dem Code 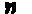 1 0 0". Dieses Signal kann vorzugsweise der Wiederaufnahme-Funktion zugeordnet sein.

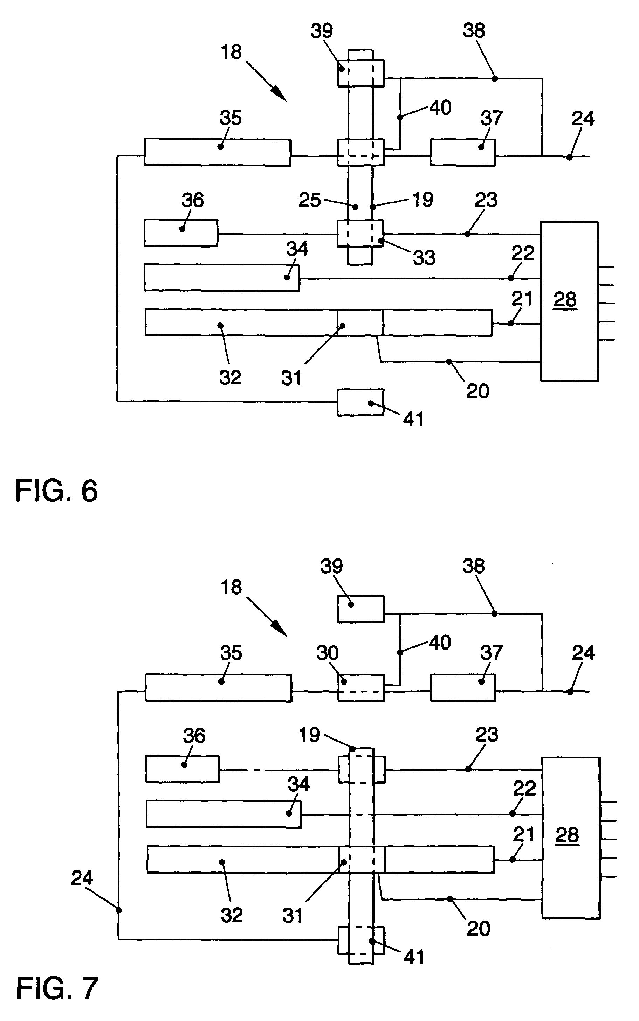

Um die gewünschte Fahrgeschwindigkeit zu erhöhen, wird der Schalter 18 in die in Fig. 6 gezeigte Stellung verschoben. In dieser Stellung bleibt das untere Leiterelement 26 der Kontakteinheit 19 mit dem an der vierten Signalleitung 23 angeschlossenen Kontaktelement 33 verbunden und kommt mit einem weiteren über einen Abzweig 38 an der Speiseleitung 24 angeschlossenen Kontaktteil 39 in Verbindung. Das der Beschleunigungsfunktion zugeordnete Signal hat somit den Code 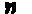 0 0 1". Das obere Leiterelement 25 der Kontakteinheit 19 ist in dieser Stellung lediglich mit dem ebenfalls über einen Abzweig 40 an der Speiseleitung 24 angeschlossenen Kontaktteil 30 verbunden, wie in Fig. 10 gezeigt ist. Demzufolge liegt in dieser Schalterstellung das der Neutralstellung entsprechende Signal nicht an.

Soll die gewünschte Fahrgeschwindigkeit verringert werden, so ist der Schalter in die in den Figuren 7 und 12 gezeigte Stellung zu verschieben. Wie in der Fig. 12 zu erkennen ist, bleibt das untere Leiterelement 26 der Kontakteinheit 19 dabei mit dem an der zweiten Signalleitung angeschlossenen Kontaktelement 32 sowie mit dem an der vierten Signalleitung angeschlossenen Kontaktelement 33 verbunden und kommt zusätzlich mit einem weiteren an der Speiseleitung 24 angeschlossenen Kontaktteil 41 in Verbindung. Das der Verzögerungsfunktion zugeordnete Signal weist somit den Code 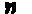 1 0 1" auf. In Fig. 12 ist ferner zu erkennen, daß das obere Leiterelement 25 der Kontakteinheit 19 in dieser Stellung nur mit dem an der ersten Signalleitung angeschlossenen Kontaktelement 31 in Verbindung steht, so daß wiederum das der Neutralstellung entsprechende Signal nicht anliegt. Ebenso liegt das Signal der Neutralstellung nicht an, wenn der Schalter 18 aus der Neutralstellung in die in den Figuren 3 und 4 gezeigten Stellungen nach links bzw. in die in der Fig. 5 gezeigte Stellung nach rechts verschoben wird, da das obere Leiterelement 25 der Kontakteinheit 19 in diesen Stellungen weder mit dem über den Abzweig 40 an der Speiseleitung 24 angeschlossenen Kontaktteil 30 noch mit dem an der ersten Signalleitung 20 angeschlossenen Kontaktteil 31 verbunden ist.

Die Kontakteinheit 19 des Schalters 18 ist federbelastet, so daß sie nach erfolgter Betätigung des Schalters 18 aus den in den Fig. 3, 5, 6 und 7 gezeigten Schaltstellungen automatisch in die Neutralstellung zurückkehrt.

Die Leiterelemente 25, 26 der Kontakteinheit 19 und die an der Speiseleitung 24 bzw. den Signalleitungen 20, 21, 22, 23 angeschlossenen Kontaktelemente 30, 35, 37, 39, 41 bzw. 31, 32, 33, 34, 36 sind derart ausgebildet, daß beim Verschieben des Schalters 18 in seine jeweiligen Stellungen keine ungewollten Funktionen der Geschwindigkeitsregelanlage aktiviert werden. Dementsprechend überragt das an der dritten Signalleitung 22 angeschlossene Kontaktelement 34 das an der Speiseleitung 24 angeschlossene Kontaktelement 35, so daß das untere Leiterelement 26 der Kontakteinheit 19 bei einer Verschiebung in die in Fig. 3 gezeigte Stellung zuerst mit dem an der dritten Signalleitung 22 angeschlossenen Kontaktelement 34 und erst danach mit dem an der Speiseleitung 24 angeschlossenen Kontaktelement 35 in Verbindung gelangt. Hierdurch wird ausgeschlossen, daß ein der in Fig. 5 gezeigten Schalterstellung entsprechendes Signal beim Verschieben des Schalters 18 nach links abgegeben wird.

In den Figuren 9 und 11 ist gezeigt, daß das untere Leiterelement 26 der Kontakteinheit 19 beim Verschieben des Schalters 18 in die der Beschleunigungsfunktion bzw. der Verzögerungsfunktion zugeordneten Stellungen erst dann mit dem jeweiligen an der Speiseleitung 24 angeschlossenen Kontaktelement 39 bzw. 41 in Verbindung kommt, wenn die Verbindung zwischen den dem oberen Leiterelement 25 der Kontakteinheit 19 zugeordneten Kontaktelementen 30, 31 unterbrochen ist. Somit ist sichergestellt, daß im Normalfall, das heißt in einem Zustand, in welchem kein Wackelkontakt im Schalter 18 vorliegt, das der Neutralstellung zugeordnete Signal nie gleichzeitig mit einem Bedienungssignal, insbesondere dem Beschleunigungssignal vorliegen kann. Wird dagegen von der Signalerfassungs- und Auswerteeinrichtung 28 gleichzeitig ein Bedienungssignal und das Signal der Neutralstellung erfaßt, so muß ein Wackelkontakt oder ein sonstiger elektrischer Fehler in dem Schalter 18 der Bedienungsvorrichtung vorliegen. Die Signalerfassungs- und Auswerteeinrichtung 28 ist so ausgebildet, daß sie in diesem Fall die dem Bedienungssignal zugeordnete Funktion sperrt und damit eine Fehlfunktion verhindert.

## Patentansprüche

1. Bedienungsvorrichtung für eine Geschwindigkeitsregelanlage eines Kraftfahrzeuges, mit einem Schalter (1), der relativ zu einem Schalterkörper in mehrere Stellungen, insbesondere eine Neutralstellung bewegbar ist, um verschiedenen Bedienungsfunktionen zugeordnete Kontakte innerhalb des Schalters (1) zu öffnen und zu schließen,
dadurch gekennzeichnet, daß
der Neutralstellung (N) ebenfalls mindestens ein Kontakt (7) zugeordnet ist und eine Signalerfassungs- und Auswerteeinrichtung (14) vorhanden ist, an der den Kontakten (2, 3, 4, 5, 6, 7) zugeordnete Signalleitungen (8, 9, 10, 11, 12, 13) angeschlossen sind, wobei die Signalerfassungs- und Auswerteeinrichtung (14) eine Logikschaltung aufweist, die bei gleichzeitigem Anliegen eines der Neutralstellung (N) zugeordneten Signals und eines einer Bedienungsfunktion zugeordneten Signals die Ausführung einer der Bedienungsfunktionen verhindert.

2. Bedienungsvorrichtung nach Anspruch 1,
dadurch gekennzeichnet, daß
die Signalerfassungs- und Auswerteeinrichtung (14) die Geschwindigkeitsregelanlage automatisch ausschaltet, wenn sie über eine bestimmte Zeitdauer keines der den verschiedenen Stellungen des Schalters (1) zugeordneten Signale erfaßt.

3. Bedienungsvorrichtung nach Anspruch 1 oder 2,
dadurch gekennzeichnet, daß die Signalerfassungs- und Auswerteeinrichtung (14) beim Auftreten eines elektrischen Fehlers an einem der Kontakte des Schalters (1) eine optische Meldung bewirkt.

4. Bedienungsvorrichtung nach einem der vorstehenden Ansprüche,
dadurch gekennzeichnet, daß
der Schalter (1) in sechs Stellungen bewegbar ist.
